(19) Europäisches Patentamt
European Patent Office
Office européen des brevets

(11) **EP 2 801 001 B1**

(12) **EUROPÄISCHE PATENTSCHRIFT**

(45) Veröffentlichungstag und Bekanntmachung des Hinweises auf die Patenterteilung:
**14.12.2016 Patentblatt 2016/50**

(21) Anmeldenummer: **13703554.9**

(22) Anmeldetag: **30.01.2013**

(51) Int Cl.:
**G05B 17/02** *(2006.01)*    **G06F 17/50** *(2006.01)*

(86) Internationale Anmeldenummer:
**PCT/EP2013/051760**

(87) Internationale Veröffentlichungsnummer:
**WO 2013/143719 (03.10.2013 Gazette 2013/40)**

(54) **VERFAHREN UND VORRICHTUNG ZUR PROZESSSTEUERUNG**

PROCESS CONTROL METHOD AND APPARATUS

PROCÉDÉ ET DISPOSITIF POUR LA COMMANDE DE PROCESSUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.03.2012 DE 102012204803**

(43) Veröffentlichungstag der Anmeldung:
**12.11.2014 Patentblatt 2014/46**

(73) Patentinhaber: **Siemens Aktiengesellschaft**
**80333 München (DE)**

(72) Erfinder: **HARTMANN, Dirk**
**85617 Aßling (DE)**

(56) Entgegenhaltungen:
**US-A1- 2010 042 386    US-B1- 6 718 291**

**Beschreibung**

Die Erfindung betrifft ein Verfahren und eine Vorrichtung zur Prozesssteuerung bei einem physikalischen Prozess, der in einem Prozessraum abläuft.

Herkömmliche verfahrenstechnische Steuerungsverfahren bzw. Verfahren zur Prozesssteuerung, insbesondere von komplexen technischen Anlagen, setzen zumeist keine Berechnungsverfahren zur Simulation der zugrunde liegenden physikalischen Prozesse innerhalb der Anlage ein. Dies liegt zum einen an der Komplexität des zugrunde liegenden physikalischen Prozesses, welcher in der komplexen Anlage abläuft, und an den benötigten Berechnungsressourcen zur Durchführung der Simulation, insbesondere an der teilweise mangelnden Verfügbarkeit von entsprechender Prozessorleistung. Die Prozessorleistung von Prozessoren nimmt ständig zu, insbesondere bei sogenannten General Purpose Computation on Graphics Processing Units (GPGPU), d.h. Grafikprozessoren. Die verfügbare Prozessorleistung stellt somit nicht mehr einen limitierenden Faktor dar und somit tritt die Robustheit und Komplexität der im Zuge einer Prozesssteuerung eingesetzten Simulation, insbesondere bei verfahrenstechnischen Steuerungen, in den Vordergrund.

Aus der Veröffentlichung A.B. Yu: Discrete element method -An effective way for particle scale research of particulate matter. In: Engineering Computations, Vol. 21, 2004, No. 2/3/4, pp. 205-214. - ISSN 0264-4401, ist lediglich bekannt, partikelbasierte Diskrete Elemente bzw. Methoden für die Steuerung physikalischer Prozesse zu verwenden.

Aus der US Patentanmeldung US 2010/0042386A1 ist ein Verfahren und eine Vorrichtung zur Simulation durch Modellierung von diskreten Elementen und einer Unterstützung zur kundenseitigen Anpassung von Teileeigenschaften bekannt, bei dem mindestens ein Verhaltensmodell auf Teile angewandt wird, die mit den diskreten Elementen korrespondieren.

Es ist daher eine Aufgabe der vorliegenden Erfindung, ein Verfahren und eine Vorrichtung zur Prozesssteuerung bei einem physikalischen Prozess zu schaffen, die eine robuste Simulation des physikalischen Prozesses mit vertretbarem Rechenaufwand erlauben.

Diese Aufgabe wird erfindungsgemäß durch ein Verfahren mit den in Patentanspruch 1 angegebenen Merkmalen gelöst.

Die Erfindung schafft demnach ein Verfahren zur Prozesssteuerung bei einem physikalischen Prozess, der in einem vorgegebenen Prozessraum abläuft mit den Schritten:

(a) Diskretisieren des physikalischen Prozesses durch partikelbasierte Gebietszerlegung des Prozessraumes (PR) in mehrere Teilvolumina ($V_T$), in denen jeweils ein Partikel (P) eine Vielzahl innerhalb des jeweiligen Teilvolumens interagierender Objekte ersetzt und einen ersten Prozessparameter (PP1) des Prozesses darstellt;

(b) Berechnen eines von dem ersten Prozessparameter (PP1) abhängigen zweiten Prozessparameters (PP2) zumindest für die inneren Partikel ($P_i$) des Prozessraumes (PR) mittels LME-Approximation und Berechnen des zweiten Prozessparameters (PP2) für die äußeren Partikel des Prozessraumes (PR) mittels MLS-Approximation auf Basis der für die inneren Partikel $P_i$ des Prozessraumes (PR) berechneten zweiten Prozessparameters (PP2);

(c) Berechnen einer Interaktionsgröße (IG) zumindest für die inneren Partikel ($P_i$) des Prozessraumes (PR) in Abhängigkeit von dem für die äußeren Partikel ($P_a$) des Prozessraumes (PR) jeweils berechneten zweiten Prozessparameter (PP2) mittels LME-Approximation und der Interaktionsgrößen (IG) für die äußeren Partikel ($P_a$) des Prozessraumes (PR) mittels MLS-Approximation auf Basis der für die inneren Partikel ($P_i$) berechneten Interaktionsgrößen (IG);

(d) Berechnen mindestens einer Steuergröße (SG) zur Steuerung des physikalischen Prozesses in dem Prozessraum (PR) in Abhängigkeit der für die inneren und äußeren Partikel ($P_i, P_a$) berechneten Interaktionsgrößen (IG); und

(e) Einstellen eines Zielprozessparameters (ZPP) des physikalischen Prozesses mittels der berechneten Steuergröße (SG).

Bei einer möglichen Ausführungsform des erfindungsgemäßen Verfahrens interagieren in dem Prozessraum mikroskopische Objekte.

Bei einer alternativen Ausführungsform des erfindungsgemäßen Verfahrens interagieren in dem Prozessraum makroskopische Objekte.

Bei einer weiteren möglichen Ausführungsform des erfindungsgemäßen Verfahrens agieren in dem Prozessraum mesokopische Objekte, d.h. Vereinigungen von mikroskopischen Objekten.

Bei einer möglichen Ausführungsform des erfindungsgemäßen Verfahrens weisen die mikroskopischen Objekte Elementarteilchen, Atome, Moleküle und/oder Mikropartikel in fester, fluider oder gasförmiger Form auf.

Bei einer möglichen Ausführungsform des erfindungsgemäßen Verfahrens weisen die makroskopischen Objekte Personen oder bewegliche Gegenstände, insbesondere Fahrzeuge, auf.

Bei einer möglichen Ausführungsform des erfindungsgemäßen Verfahrens weisen die mesokopischen Objekte Vereinigungen von mikroskopischen Objekten auf.

Bei einer weiteren möglichen Ausführungsform des erfindungsgemäßen Verfahrens erfolgt die Berechnung der Interaktionsgrößen für die Partikel in Abhängigkeit des zweiten Prozessparameters iterativ.

Bei einer weiteren möglichen Ausführungsform des erfindungsgemäßen Verfahrens ist der Zielprozessparameter des physikalischen Prozesses durch einen von dem ersten Prozessparameter abhängigen Zielprozessparameter des physikalischen Prozesses gebildet.

Bei einer weiteren möglichen Ausführungsform des erfindungsgemäßen Verfahrens werden die Interaktionsgrößen durch Kräfte gebildet, die zwischen den Partikeln vorherrschen.

Bei einer weiteren möglichen Ausführungsform des erfindungsgemäßen Verfahrens wird der erste Prozessparameter durch die Partikelgeschwindigkeit des innerhalb eines Teilvolumens des Prozessraumes befindlichen Partikels gebildet.

Bei einer weiteren möglichen Ausführungsform des erfindungsgemäßen Verfahrens wird der zweite Prozessparameter durch einen Stresstensor des innerhalb des Teilvolumens des Prozessraumes befindlichen Partikels gebildet.

Bei einer weiteren möglichen Ausführungsform des erfindungsgemäßen Verfahrens steuert die Steuergröße mindestens einen Aktor der Anlage, in welchem der Prozess abläuft.

Bei einer weiteren möglichen Ausführungsform des erfindungsgemäßen Verfahrens hängt der zweite Prozessparameter des Prozesses von Umgebungsprozessparametern des Prozesses ab, die an oder in dem Prozessraum mittels Sensoren sensorisch erfasst werden und die bei der Berechnung des zweiten Prozessparameters in Abhängigkeit von dem ersten Prozessparameter berücksichtigt werden.

Bei einer weiteren möglichen Ausführungsform des erfindungsgemäßen Verfahrens erfolgt die Berechnung der Interaktionsgröße für die Partikel und der Steuergröße zur Laufzeit des Prozesses.

Bei einer weiteren möglichen Ausführungsform des erfindungsgemäßen Verfahrens wird der Zielparameter des physikalischen Prozesses mittels der Steuergröße gesteuert.

Bei einer weiteren möglichen Ausführungsform des erfindungsgemäßen Verfahrens wird der Zielparameter des physikalischen Prozesses auf einen Sollwert geregelt.

Bei einer weiteren möglichen Ausführungsform des erfindungsgemäßen Verfahrens wird der Prozessraum des Prozesses durch eine Gegenstandsoberfläche eines zu bearbeitenden Gegenstandes begrenzt, wobei der Gegenstand aus Objekten, insbesondere aus Atomen oder Gruppen von Atomen, besteht.

Diese Grenze kann Randbedingungen vorgeben, so dass hier keine Interpolation vorgenommen werden muss, z.B. im Falle von Haftrandbedingungen ist V=0 klar (vgl. DH1).

Bei einer möglichen Ausführungsform des erfindungsgemäßen Verfahrens wird der Prozessraum des Prozesses durch eine Gegenstandsoberfläche eines zu bearbeitenden Gegenstandes begrenzt, bei dem es sich um ein Werkstück handelt.

Bei einer weiteren möglichen Ausführungsform des erfindungsgemäßen Verfahrens wird der Prozessraum des Prozesses durch eine Wandung eines Strömungskanals begrenzt, durch den Objekte, insbesondere Moleküle oder Gruppen von Molekülen, strömen.

Diese Grenze kann Randbedingungen vorgeben, so dass hier keine Interpolation vorgenommen werden muss, z.B. im Falle von Haftrandbedingungen ist V=0 klar (vgl. DH1).

Bei einer weiteren möglichen Ausführungsform des erfindungsgemäßen Verfahrens wird der erste Parameter des Prozesses durch eine Partikeltemperatur oder einen Partikeldruck des innerhalb eines Teilvolumens des Prozessraumes befindlichen Partikels gebildet oder beeinflusst.

Die Erfindung schafft ferner eine Vorrichtung zur Prozesssteuerung mit den in Patentanspruch 1 angegebenen Merkmalen.

Die Erfindung schafft demnach eine Prozesssteuerung mit:

(a) eine Diskretisierungseinheit, die den physikalischen Prozess durch partikelbasierte Gebietszerlegung des Prozessraumes (PR) in mehrere Teilvolumina ($V_T$) zerlegt, in denen jeweils ein Partikel (P) eine Vielzahl innerhalb des jeweiligen Teilvolumens interagierender Objekte ersetzt und einen ersten Prozessparameter (PP1) des diskretisierten physikalischen Prozesses darstellt; und mit

(b) einer Berechnungseinheit, die einen von dem ersten Prozessparameter (PP1) abhängigen zweiten Prozessparameters (PP2) zumindest für die inneren Partikel ($P_i$) des Prozessraumes (PR) mittels LME-Approximation berechnet und den zweiten Prozessparameter (PP2) für die äußeren Partikel ($P_a$) des Prozessraumes (PR) mittels MLS-Approximation auf Basis der für die inneren Partikel $P_i$ des Prozessraumes (PR) berechneten zweiten Prozessparameters (PP2) berechnet;

wobei die Berechnungseinheit Interaktionsgrößen (IG) zumindest für die inneren Partikel ($P_i$) des Prozessraumes (PR) in Abhängigkeit von dem für die äußeren Partikel ($P_a$) des Prozessraumes (PR) jeweils berechneten zweiten Prozessparameter (PP2) mittels LME-Approximation und die Interaktionsgrößen (IG) für die äußeren Partikel ($P_a$) des Prozessraumes (PR) mittels MLS-Approximation auf Basis der für die inneren Partikel ($P_i$) berechneten Interaktionsgrößen

(IG) berechnet, wobei mindestens eine Steuergröße (SG) zur Steuerung des physikalischen Prozesses in dem Prozessraum (PR) in Abhängigkeit der für die inneren und äußeren Partikel ($P_i$,$P_a$) berechneten Interaktionsgrößen (IG) ermittelt wird, wobei die Berechnungseinheit mindestens einen Zielprozessparameter (ZPP) des physikalischen Prozesses mittels der berechneten Steuergröße (SG) einstellt.

Im Weiteren werden mögliche Ausführungsbeispiele des erfindungsgemäßen Verfahrens und der erfindungsgemäßen Vorrichtung zur Prozesssteuerung bei einem physikalischen Prozess unter Bezugnahme auf die beigefügten Figuren näher erläutert.

Es zeigen:

Fig. 1a, 1b   Diagramme zur Gegenüberstellung eines kontinuierlichen Feldes, welches mit einer partikelbasierten Gebietszerlegung diskretisiert wird, wie dies bei einer möglichen Ausführungsform des erfindungsgemäßen Verfahren und der erfindungsgemäßen Vorrichtung geschieht;

Fig. 2   eine schematische Darstellung zur Auswertung eines durch partikelbasierte Gebietszerlegung diskretisierten Prozessraums;

Fig. 3   ein weiteres beispielhaftes Diagramm zur Darstellung eines Beispieles für einen durch partikelbasierte Gebietszerlegung diskretisierten physikalischen Prozesses mit Randpartikeln; und

Fig. 4   ein Blockschaltbild einer möglichen Ausführungsform der erfindungsgemäßen Vorrichtung zur Prozesssteuerung;

Fig. 5   ein Ablaufdiagramm zur Darstellung eines Ausführungsbeispiels des erfindungsgemäßen Verfahrens zur Prozesssteuerung;

Fig. 6   ein Diagramm zur Darstellung eines Beispieles eines physikalischen Prozesses, bei dem das erfindungsgemäße Verfahren und die erfindungsgemäße Vorrichtung zur Prozesssteuerung einsetzbar sind.

Simulationsberechnungen von räumlichen physikalischen Prozessen können allgemein auf Diskretisierungen der zugrunde liegenden Gleichungen mittels räumlicher Gitter basieren. Bei derartigen räumlichen physikalischen Prozessen handelt es sich beispielsweise um reaktive Strömungen oder um Fließprozesse von viskoelastischen Materialien. Treten bei derartigen räumlichen physikalischen Prozessen große bzw. starke Verformungen auf, kommen derartige gitterbasierte Diskretisierungsverfahren an ihre Grenzen. Das Gleiche gilt bei Auftreten von freien Oberflächen oder bei der Interaktion mehrerer Materialien, z.B. bei einer Fluid-Struktur-Interaktion. Daher wird meist die wiederholte Generierung neuer Gitter durchgeführt. Dies erfordert allerdings relativ komplexe Algorithmen, die zu einem hohen Implementierungsaufwand führen.

Eine Alternative dazu bietet die Möglichkeit, komplexe Geometrien indirekt auf Gitter aufzulösen. Beispiele hierfür stellen das Volume-of-Fluid-Verfahren sowie die sogenannte Level-Set-Methode, dar. Weiterhin kann auch die Realisierung von komplexen Geometrien mittels sogenannter Lattice-Boltzmann-Verfahren erfolgen. Die Robustheit derartiger Berechnungsverfahren, gerade bei zeitlich dynamischen Geometrien, ist jedoch begrenzt. Derartige Berechnungsverfahren weisen in vielen Fällen auch nur eine schlechte bzw. geringe Konvergenz auf. Gleichzeitig erfordern die herkömmlichen Verfahren einen ähnlich hohen Implementierungsaufwand wie gitterbasierte Verfahren mit wiederholter Generierung geeigneter räumlicher Gitter.

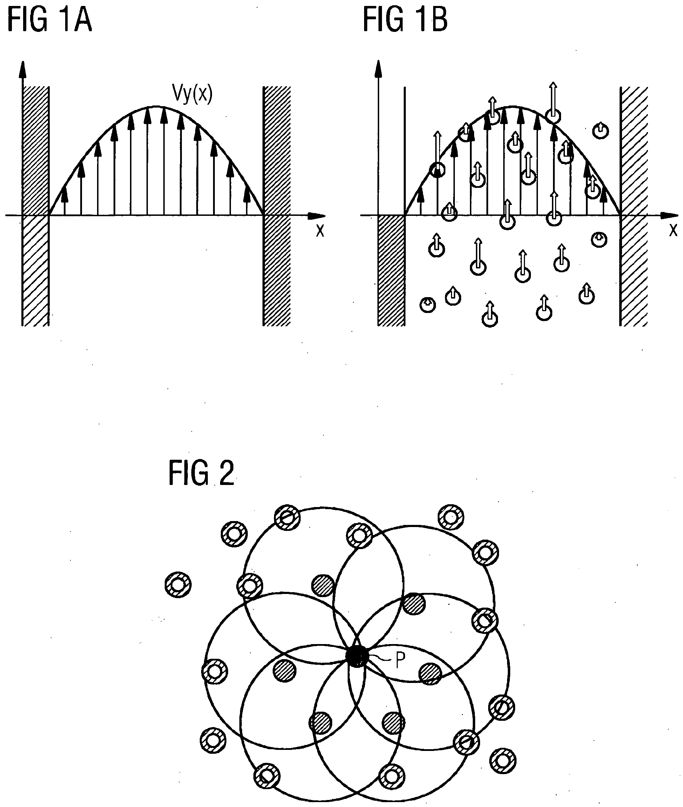

Daher werden erfolgt bei dem erfindungsgemäßen Verfahren zur Prozesssteuerung eine Diskretisierung des physikalischen Prozesses durch partikelbasierte Methoden (PM). Im Gegensatz zu molekularen Ansätzen wird bei derartigem Berechnungsansatz nicht die mikroskopisch physikalische Partikelinteraktion betrachtet, sondern eine partikelbasierte Beschreibung. Bei den Partikeln handelt es sich nicht um physikalische Partikel, sondern um virtuelle Partikel, welche jeweils eine Vielzahl innerhalb eines jeweiligen Teilvolumens VT interagierender Objekte ersetzen. Dabei wird eine kontinuierliche Größe, beispielsweise die Geschwindigkeit V innerhalb einer Strömung, durch einzelne Partikel bzw. virtuelle Partikel P ersetzt, wie in Fig. 1 gezeigt.

Das zu beschreibende kontinuierliche Feld, beispielsweise die in Fig. 1a dargestellte Strömung innerhalb eines Rohres mit dem dargestellten Strömungsprofil wird somit in eine Überlagerung von einzelnen lokalen Feldern bzw. Funktionen $\Phi_j$ überführt, die jeweils den (virtuellen) Partikeln P zugeordnet sind. Diese virtuellen Partikel P haben typischerweise einen beschränkten Träger, d.h. die Funktion $\Phi_j(x)$ ist außerhalb eines gegebenen Radius gleich 0. Aufgrund dieser Eigenschaften können die Funktionen $\Phi_j(x)$ durch Approximationsverfahren bestimmt werden, beispielsweise durch eine Moving-Least-Square(MLS)-Approximation, wie beispielsweise in G.A. Dilts: "Moving-Least-Square-Particle Hydrodynamics" Consistency and Stability, Int. J. Numer. Meth. Engng. 44: 1115 (1155) beschrieben ist oder auf eine Local-Maximum-Entropy(LME)-Approximation, wie sie beispielsweise in M. Arroyo, M. Ortiz: "Local maximum-entropy approximation schemes: a seamless bridge between finite elements and meshfree methods, Int. J. Numer. Meth. Engng. 65: 2167-2202 (2006) beschrieben ist.

Die Diskretisierung des physikalischen Prozesses beruht auf der Auswertung mithilfe von partikelbasierten Methoden von einzelnen virtuellen Partikeln mit Positionen x$_i$, d.h. Auswertungen von f(x$_i$), wobei:

$$f(x) = \sum_{J=1}^{M} f_{J} \phi_{J}(x) \quad mit \quad f_J = f(x_J)$$

Hierbei genügt es im Allgemeinen, die Informationen des virtuellen Partikels P in der Nachbarschaft des Punktes bzw. Partikels x$_i$ bei der Auswertung bzw. Berechnung zu berücksichtigen, da die Funktionen $\Phi_j$ einen beschränkten Träger aufweisen. Das heißt, die entsprechenden Funktionen $\Phi_j$ der Beschreibung der partikelbasierten Methode P werden somit für jedes Partikel an wenigen Punkten, d.h. den Partikelpositionen, in der Nachbarschaft der Position x$_i$, ausgewertet. Eine schematische Illustration ist in Fig. 2 dargestellt. Somit können die Werte $\Phi_j(x_i)$ effizient durch Approximationsverfahren bestimmt werden, insbesondere durch die Moving-Least-Square(MLS)-Approximation oder die Local-Maximum-Entropy (LME)-Approximation, wobei für jeden auszuwertenden Punkt x eine derartige Approximation durchgeführt wird. Fig. 2 zeigt im Zentrum einen auszuwertenden Punkt bzw. ein auszuwertendes Partikel P und die darum angeordnete relevante Partikel mit Träger von $\Phi$, d.h. in einem Bereich, in dem $\Phi \neq 0$. Weiterhin sieht man am äußeren Rand irrelevante Partikel. Durch Diskretisieren des physikalischen Prozesses durch partikelbasierte Gebietszerlegung des Prozessraumes PR in mehrere Teilvolumina VT wird der Prozess durch virtuelle Partikel P dargestellt, die jeweils eine Vielzahl innerhalb des jeweiligen Teilvolumens VT tatsächlich interagierender realer Objekte ersetzt und die einen ersten Prozessparameter PP1 des Prozesses darstellen.

Beispielsweise können sich in dem Prozessraum PR mikroskopische Objekte befinden, insbesondere Elementarteilchen, Atome, Moleküle und/oder Mikropartikel in fester, fluider oder gasförmiger Form. Alternativ können in dem Prozessraum PR auch makroskopische Objekte vorhanden sein, beispielsweise Personen oder bewegliche Gegenstände, etwa Fahrzeuge oder dergleichen. Weiterhin können in dem Prozessraum PR auch sogenannte mesokopische Objekte vorhanden sein, bei denen es sich um Vereinigungen von mikroskopischen Objekten handelt, beispielsweise Vereinigungen von mikroskopischen Teilchen, insbesondere Atomen, zu einem virtuellen Superatom. Der Prozessraum PR des Prozesses kann beispielsweise durch eine Gegenstandsoberfläche eines zu bearbeitenden Gegenstandes oder Werkstückes WS begrenzt sein, wobei das Werkstück WS aus Objekten, insbesondere aus Atomen oder Gruppen von Atomen, besteht. Weiterhin ist es möglich, dass der Prozessraum PR des Prozesses durch eine Wandung, beispielsweise eines Strömungskanals, begrenzt wird, durch den Objekte, insbesondere Moleküle oder Gruppen von Molekülen hindurchströmen. Der jeweilige physikalische Prozess wird bei dem erfindungsgemäßen Verfahren zur Prozesssteuerung durch partikelbasierte Gebietszerlegung des Prozessraumes in mehrere Teilvolumina VT diskretisiert. In den Teilvolumina ersetzt jeweils ein Partikel bzw. virtuelles Partikel P eine Vielzahl innerhalb des jeweiligen Teilvolumens interagierender realer Objekte, wobei das Partikel einen ersten Prozessparameter PP1 des Prozesses darstellt. Beispielsweise wird der erste Prozessparameter PP1 durch die Partikelgeschwindigkeit des innerhalb eines Teilvolumens des Prozessraumes PR befindlichen Partikels bzw. virtuellen Partikels gebildet. Weiterhin ist es beispielsweise möglich, dass der erste Prozessparameter PP1 des Prozesses durch eine Partikeltemperatur oder durch einen Partikeldruck des innerhalb des Teilvolumens des Prozessraumes befindlichen Partikels gebildet wird oder der erste Prozessparameter PP1 hierdurch beeinflusst wird.

Zur weiteren Illustration des erfindungsgemäßen Prozesssteuerungsverfahrens wird im Folgenden eine beispielhafte Diskretisierung der kompressiblen Navier-Stokes(NS)-Gleichungen mit einem Stresstensor betrachtet:

$$\frac{d\rho}{dt} = -\rho \vec{\nabla} \cdot V \tag{NS}$$

$$\rho \frac{dV}{dt} = \nabla \cdot \sigma + F$$

$$\sigma = -pId + 2\mu \dot{\varepsilon} + \lambda\, trace\, \dot{\varepsilon} Id \quad mit \quad \dot{\varepsilon}_{\alpha\beta} - \frac{1}{2}(\partial_{\alpha} V_{\beta} + \partial_{\beta} V_{\alpha}), \tag{ST}$$

wobei $\sigma$ der Stresstensor, V die Geschwindigkeit F und eine Kraft darstellt.

Unter Verwendung einer partikelbasierten Diskretisierung bzw. einer partikelbasierten Gebietszerlegung ergibt sich nach einigen Berechnungsschritten die folgende diskrete Darstellung:

$$\frac{dp i}{dt} = -pi \sum_{f} (\nabla \emptyset_f) \cdot v_f \qquad\qquad (DNS)$$

$$pi \frac{dV_i}{dt} = \sum_{f} (\nabla \emptyset_f) \cdot \sigma_f + V_i f_i$$

mit dem Stresstensor:

$$\sigma = -pId + 2\mu\dot{e} + \lambda\, trace\,\dot{e}Id \quad mit \qquad (DST)$$

$$\dot{e}_{\alpha\beta} = \frac{1}{2} \sum_{f} (V_{\alpha f} \partial_{\beta} \emptyset_f + V_{\beta f} \partial_{\alpha} \emptyset_f)$$

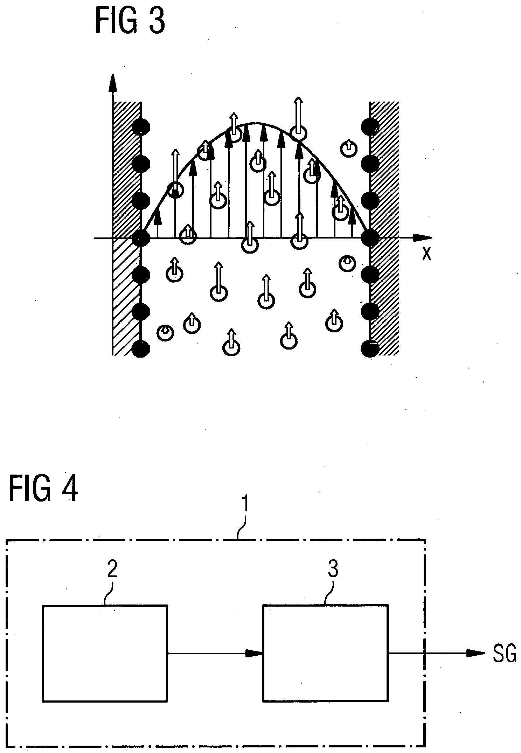

Weiterhin ist die Realisierung der oben betrachteten Vorgehensweise für sogenannte Randpartikel nicht trivial, da einerseits Approximationsverfahren nicht konvergieren, beispielsweise das Local-Maximum-Entropy(LME)-Approximationsverfahren, oder aber vorgegebene Randwerte durch diese nicht exakt dargestellt werden, wie dies beispielsweise bei der Moving-Least-Square(MLS)-Approximation der Fall ist. Das LME-Approximationsverfahren konvergiert nicht an Rändern bzw. Randpartikeln, wie sie beispielhaft in Fig. 3 dargestellt sind. In Fig. 3 sind Randpartikel eines Prozessraumes PR, der durch die Innenwandung des Strömungskanals begrenzt ist, schwarz dargestellt.

Bei Partikeln P kann man zwischen unterschiedlichen Partikeltypen unterscheiden. Als Partikeltypen gibt es innere Partikel $P_i$ sowie äußere Partikel $P_a$ bzw. Randpartikel. Bei den Randpartikeln kann man seinerseits zwischen festen Randpartikeln mit essenziellen Randbedingungen mit vorgegebenen Werten unterscheiden, die auch als sogenannte Ghostpartikel bezeichnet werden, sowie freien Randpartikeln ohne vorgegebene Werte bzw. nur vorgegebenen Gradienten. Bei den sogenannten Ghostpartikeln handelt es sich beispielsweise um Partikel auf bzw. an Rändern mit Haftrandbedingungen in einer Strömung. Bei den freien Randpartikeln handelt es sich beispielsweise um Partikel an einer freien Oberfläche in einer Strömung. Fig. 3 zeigt beispielsweise freie Randpartikel einer freien Oberfläche innerhalb eines Strömungskanals, durch den beispielsweise ein Fluid hindurchfließt. Insbesondere bei festen Randpartikeln mit essenziellen Randbedingungen weisen viele herkömmliche Diskretisierungsverfahren Nachteile auf. Bei dem erfindungsgemäßen Verfahren zur Prozesssteuerung können essenzielle Randbedingungen für eine zu simulierende Größe bzw. einen Prozessparameter, beispielsweise durch eine fest vorgegebene Geschwindigkeit am Rand, d.h. der sogenannten Haftrandbedingung, realisiert bzw. berücksichtigt werden. Dabei werden zur Realisierung der essenziellen Randbedingungen bei partikelbasierten Methoden partikelbasierte Approximationsverfahren eingesetzt.

Bei dem erfindungsgemäßen Verfahren zur Prozesssteuerung bei einem physikalischen Prozess werden unterschiedliche Approximationsverfahren mit einer LME-Approximation sowie einer MLS-Approximation eingesetzt. Dabei erfolgt eine Kopplung dieser unterschiedlichen Approximationsverfahren innerhalb eines Verfahrens zur partikelbasierten Simulation eines physikalischen Prozesses zu dessen Prozesssteuerung. Dabei wird bei dem erfindungsgemäßen Verfahren ein allgemeines Approximationsverfahren, d.h. ein Verfahren ohne Berücksichtigung von essenziellen Randbedingungen, sowie ein Approximationsverfahren, das essenzielle Randbedingungen berücksichtigt, beispielsweise in Form einer Nebenbedingung, gekoppelt. Dabei wird vorzugsweise eine MLS(Moving-Least-Square)-Methode als Approximationsverfahren ohne Berücksichtigung von Randbedingungen, sowie ein LME(Local-Maximum-Entropy)-Approximationsverfahren eingesetzt, das essenzielle Randbedingungen berücksichtigt. Bei dem erfindungsgemäßen Verfahren werden ein von dem ersten Prozessparameter PP1 abhängiger zweiter Prozessparameter zumindest für die inneren Partikel $P_i$ des Prozessraumes PR mittels LME-Approximation und ein zweiter Prozessparameter PP2 für die äußeren Partikel $P_a$ des Prozessraumes mittels MLS-Approximation auf Basis der für die inneren Partikel $P_i$ des Prozessraumes PR berechneten zweiten Prozessparameters PP2 berechnet. Beispielsweise wird der erste Prozessparameter PP1 durch die Partikelgeschwindigkeit V des innerhalb eines Teilvolumens VT des Prozessraumes PR befindlichen Partikels gebildet. Weiterhin kann der zweite Prozessparameter PP2 bei diesem Beispiel durch einen Stresstensor T des innerhalb des Teilvolumens VT des Prozessraumes PR befindlichen Partikels P gebildet werden. Der Stresstensor $\sigma$ ist proportional zu der Divergenz der Geschwindigkeit V. Bei der Geschwindigkeit V handelt es sich um eine kontinuierliche physikalische Größe. Weitere Beispiele für derartige physikalische Größen sind Druck P, Temperatur T, Deformationen oder andere mechanische kontinuierliche Größen. Weiterhin kann es sich bei diesen kontinuierlichen physikalischen Größen, auch um elektrische Größen wie Spannung U oder dergleichen handeln. Die jeweilige physikalische Größe, beispielsweise die Geschwindigkeit V, kann einem physikalischen Naturgesetz unterworfen sein, wobei die zweite räumliche Ableitung der betrachteten jeweiligen physikalischen Größe selbst beinhaltet. Dies ist beispielsweise bei der Temperatur der Fall. Weiterhin gilt dies auch beispielsweise für die Geschwindigkeit V ($V. = DxC(T)DxV + F_{extern}$), wobei C eine temperaturabhängige Konstante und $F_{extern}$ eine äußere Kraft darstellt. Weiterhin ist der Stresssensor $\sigma$ durch $C(T)DxV$ gegeben. Das erfindungsgemäße Verfahren zur Prozesssteuerung eignet sich vorzugsweise für einen physikalischen Prozess, der mindestens eine derartige kontinuierliche physikalische Größe aufweist.

Nach Berechnung eines von dem ersten Prozessparameter PP1 abhängigen zweiten Prozessparameters PP2 für die inneren Partikel P des Prozessraumes PR mittels LME-Approximation sowie Berechnen des zweiten Prozessparameters PP2 für die äußeren Partikel $P_a$ des Prozessraumes PR mittels MLS-Approximation erfolgt in einem weiteren Schritt bei dem erfindungsgemäßen Verfahren die Berechnung einer Interaktionsgröße IG. Bei dieser Interaktionsgröße IG kann es sich beispielsweise um physikalische Kräfte F handeln, die zwischen den Partikeln P herrschen. Dabei wird eine Interaktionsgröße IG zumindest für die inneren Partikel $P_i$ des Prozessraumes PR in Abhängigkeit von dem für die äußeren Partikel $P_a$ des Prozessraumes PR jeweils berechneten zweiten Prozessparameter PP2 mittels LME-Approximation sowie die Interaktionsgrößen IG für die äußeren Partikel $p_a$ des Prozessraumes PR mittels MLS-Approximation auf Basis der für die inneren Partikel berechneten Interaktionsgrößen IG berechnet, sofern dies nicht durch Randbedingungen oder Sensorwerte ist. Bei den Verfahren werden die Interaktionsgrößen IG, beispielsweise Kräfte, genutzt, um neue Partikelpositionen von Partikeln zu berechnen, wobei die Partikel eine Geschwindigkeit aufweisen. Daraufhin wird interaktiv ein neuer erster Prozessparameter PP1 basierend auf den Interaktionsgrößen berechnet. Anschließend wird in Abhängigkeit der für die inneren und äußeren Partikel berechneten Interaktionsgrößen IG, beispielsweise Kräfte F, mindestens eine Steuergröße SG zur Steuerung des physikalischen Prozesses in dem Prozessraum PR ermittelt. Anschließend wird ein Zielprozessparameter ZPP des physikalischen Prozesses mittels der berechneten Steuergröße SG eingestellt. Beispielsweise kann die Steuergröße SG mindestens einen Aktor der technischen Anlage steuern, in welchem der jeweilige Prozess abläuft.

Der zweite Prozessparameter PP2 des Prozesses kann von Umgebungsprozessparametern UPP des Prozesses abhängen. Diese Umgebungsprozessparameter UPP werden mittels Sensoren sensorisch erfasst. Dabei können die Umgebungsprozessparameter UPP an oder innerhalb des Prozessraumes PR sensorisch erfasst werden. Die Umgebungsprozessparameter UPP werden vorzugsweise bei der Berechnung des zweiten Prozessparameters PP2 in Abhängigkeit von dem ersten Prozessparameter PP1 berücksichtigt. Bei einer möglichen Ausführungsform des erfindungsgemäßen Verfahrens wird der Zielparameter ZPP des physikalischen Prozesses mittels der Steuergröße SG gesteuert oder auf einen Sollwert geregelt. Die Berechnung der Interaktionsgrößen IG, beispielsweise der Kräfte F, für die Partikel P sowie die Berechnung der Steuergröße SG erfolgen vorzugsweise zur Laufzeit des Prozesses P innerhalb der Anlage. Die Simulation eines kontinuumsmechanischen Prozesses, beispielsweise innerhalb der Mechanik oder Strömungsmechanik, kann beispielsweise mittels sogenannter kompressibler Navier-Stokes-Gleichungen erfolgen. Dabei können beispielsweise Geschwindigkeitswerte und deren Ableitungen an inneren Materialpunkten und auch an freien Randpunkten zur Berechnung des Stresstensors mithilfe der Gleichung (DST) jeweils mit einer Local-Maximum-Entropy-Approximation (LME) bestimmt werden. Zur Berechnung der Approximation werden sowohl innere als auch äußere Punkte bzw. Partikel herangezogen. Dies ist möglich, da auch die essenziellen Randpartikel durch die Randbedingungen einen dezidierten Wert zugewiesen erhalten. Beispielsweise ist bei Haftrandbedingungen die Geschwindigkeit V=0. Im Gegensatz hierzu sind Ableitungen der Stresstensoren $\sigma$, für die die Gleichung (DNS) benötigt werden, nicht aus den essenziellen Randpartikeln definiert. Für innere Partikel direkt an diesen Rändern sind somit entsprechende Gradienten mittels des LME-Verfahrens nicht ohne Weiteres bestimmbar, da das LME-Verfahren nicht konvergiert. Da diese Gradienten jedoch für die Bestimmung der Kräfte bzw. der Interaktionsgrößen IG an den inneren Partikeln $P_i$ benötigt werden (wie aus der Gleichung (DNS) hervorgeht) und diese Interaktionsgrößen IG wiederum zur Integration eines Zeitschrittverfahrens benötigt werden, werden bei dem erfindungsgemäßen Verfahren zur Prozesssteuerung die LME-Approximation und die MLS-Approximation kombiniert bzw. gemeinsam eingesetzt. Demnach wird ein von dem ersten Prozessparameter PP1 abhängiger zweiter Prozessparameter PP2 zumindest für die inneren Partikel $P_i$ des Prozessraumes PR mittels LME-Approximation berechnet. Ferner erfolgt eine Berechnung des zweiten Prozessparameters PP2 für die äußeren Partikel $P_a$ des Prozessraumes mittels MLS-Approximation auf Basis des für die inneren Partikel $P_i$ des Prozessraumes PR berechneten zweiten Prozessparameters PP2. Beispielsweise werden Stresstensoren $\sigma$ für die inneren Partikel $P_i$ aus den Geschwindigkeitsgradienten mittels LME-Approximation aus allen Partikeln bestimmt. Weiterhin werden für die äußeren Partikel $P_a$ Stresstensorwerte mittels MLS-Approximation aus den innen bestimmten Stresstensoren extrapoliert. Darüber hinaus werden Kräfte F als Interaktionsgrößen IG aus Stresstensorableitungen für die inneren Partikel $P_i$ mittels LME-Approximation bestimmt.

Bei einer möglichen Ausführungsform des erfindungsgemäßen Verfahrens wird nur zwischen essenziellen Randpunkten und freibeweglichen Partikeln, d.h. zwischen inneren Partikel und freien $n_1$ Randpartikel unterschieden. Dabei werden Partikel an freien Oberflächen wie innere Partikel $P_i$ behandelt. Falls an den freien Randpartikeln eine LME-Approximation nicht gelingt, kann in einer vorteilhaften Implementierung in diesem Fall jedoch auf eine MLS-Approximation nullter Ordnung zugegriffen werden, falls, d.h. den sogenannten Shepart-Funktionen.

Im Folgenden wird ein Beispiel für die Simulation eines physikalischen Prozesses einer Prozesssteuerung dargestellt:

```
Simulation step
Setup data
Setup approximation schemes
    LME approximation for all material particles using all particles
    MLS approximation for all ghost particles using all material particles
    Approximation using Shepard functions, if LME or MLS approximation failed
Calculate stress tensors
    Calculate stress tensors for flow particles (using LME approximants)
    Extrapolate stress tensors to ghost particles (using MLS approximants)
Solve Newton equations of motion
    Calculate forces using stress tensor value inside the Flow (using LME
    approximants)
    Integrate evolution equation
Update data
```

Im Vergleich zu herkömmlichen partikelbasierten Verfahren (beispielsweise Smooth Particle Hydrodynamics) bieten partikelbasierte Verfahren, die auf Interpolations- bzw. Approximationsverfahren beruhen, eine deutlich höhere Genauigkeit. Herkömmliche Verfahren erlauben keine exakte Interpolation einer linearen Funktion (Konsistenz erster Ordnung). Durch Kombination einer partikelbasierten Methode PM mit entsprechenden Interpolationsverfahren wird die Konsistenz erster Ordnung garantiert.

Mögliche einsetzbare Interpolationsverfahren umfassen die Moving-Least-Square(MLS)-Interpolation sowie die Local-Maximum-Entropy(LMS)-Interpolation. Auf der einen Seite liegt der Vorteil der MLS-Interpolation bzw. Approximation in einem geringeren Rechenaufwand und erlaubt das Lösen einer 4x4-Matrix in 3 Dimensionen bei Konsistenz erster Ordnung im Vergleich zu einer LME-Interpolation. Auf der anderen Seite liegt der Vorteil der LME-Interpolation gegenüber einer MLS-Interpolation bzw. Approximation in der exakten Reproduktion von Randwerten. Nähert sich ein Auswertepunkt der Interpolation einem Randpartikel an, so nähert sich auch der interpolierte Wert dem Funktionswert des Randpartikels an. Sind die Werte an den Randpartikeln vorgegeben, beispielsweise durch Randbedingungen/Sensorswerte, bietet dies einen erheblichen Vorteil. Bei Haftrandbedingungen (beispielsweise Strömungsgeschwindigkeit am Rand = Randgeschwindigkeit) stellt dies eine wesentliche Eigenschaft dar, die die Qualität der Berechnungsergebnisse von Simulationen bestimmt. Um diese Eigenschaft auch innerhalb einer MLS-Interpolation zu realisieren, wird herkömmlicherweise ein erheblicher Rechenaufwand benötigt, der herkömmlicherweise die Robustheit der Simulation beschränkt. Daher werden bei dem erfindungsgemäßen Verfahren zur Prozesssteuerung die LME-Approximation und die MLS-Approximation gekoppelt bzw. kombiniert, um die Vorteile des jeweiligen Interpolations- bzw. Approximationsverfahrens auszunutzen.

Eine LME-Interpolation bzw. -Approximation ist nur innerhalb eines Gebietes bzw. Prozessraumes unter Ausschluss des Randes auswertbar. Dies ist eine diesem Approximationsverfahren inhärent zugrunde liegende Beschränkung. Die LME-Interpolation bietet nicht die Möglichkeit der Extrapolation von Werten aus dem Partikelgebiet heraus. Ist diese nicht möglich, beispielsweise bei Randpartikeln, und sind die entsprechenden Werte an den Partikeln nicht durch essenzielle Randbedingungen oder Sensorwerte vorgegeben, so kann auf eine LMS-Interpolation zurückgegriffen werden.

Das erfindungsgemäße Verfahren zur Prozesssteuerung eignet sich zur Implementation mit partikelbasierten Methoden PM, wobei eine Realisierung der Randwerte, d.h. Werte an den Randpartikeln, durch eine geschickte Kombination zwischen LME- und MLS-Approximation erreicht wird. Das erfindungsgemäße Verfahren zur Prozesssteuerung zeichnet sich durch eine Kombination unterschiedlicher Approximationsverfahren für eine partikelbasierte Methode aus. Durch die Kombination der beiden Approximationsverfahren können unterschiedlichste Randbedingungen effizient realisiert werden. Das erfindungsgemäße Verfahren zur Prozesssteuerung zeichnet sich insbesondere durch die folgenden Vorteile aus. Das Verfahren erlaubt die Realisierung von beliebigen Randbedingungen in partikelbasierten Verfahren, insbesondere Simulationsverfahren. Weiterhin erlaubt das erfindungsgemäße Verfahren eine massive Parallelisierung von Berechnungsalgorithmen, beispielsweise auf Grafikkarten oder dergleichen. Weiterhin ist bei dem erfindungsgemäßen Verfahren die Modellierung von unterschiedlichsten physikalischen Phänomenen bzw. Parametern relativ einfach, da die Modellierung immer als ein einfaches Mehrkörper-System (Newtonsche-Punktmechanik) interpretiert werden kann. Das erfindungsgemäße Verfahren zur Prozesssteuerung ist zudem besonders robust und erlaubt eine genaue Steuerung bzw. Regelung von Zielprozessparameter ZPP. Im Gegensatz zu herkömmlichen gitterbasierten Verfahren können dabei einfache Heuristiken die Stabilität des Berechnungsverfahrens bzw. der Simulation deutlich erhöhen. Weiterhin ist der Implementierungsaufwand des erfindungsgemäßen Verfahrens zur Prozesssteuerung relativ gering, wodurch eine hervorragende Portabilität auf andere Rechnerarchitekturen gewährleistet ist.

Fig. 4 zeigt ein Blockschaltbild eines möglichen Ausführungsbeispiels für eine Prozesssteuerungsvorrichtung 1 gemäß der Erfindung. Die in Fig. 4 dargestellte Prozesssteuerungsvorrichtung 1 dient zur Steuerung eines physikalischen Prozesses durch eine Steuergröße SG, die an einem Ausgang der Vorrichtung abgegeben wird. Mit der Steuerungsgröße SG lässt sich ein Zielprozessparameter ZPP des physikalischen Prozesses einstellen. Die Berechnung der Steuergröße SG erfolgt vorzugsweise zur Laufzeit des jeweiligen Prozesses auf einer technischen Anlage. Beispielsweise kann die von der Vorrichtung 1 abgegebene Steuergröße SG einen Aktor der Anlage einstellen bzw. betätigen, in welcher der physikalische Prozess abläuft. Bei dem Aktor handelt es sich beispielsweise um ein Ventil oder dergleichen. Weiterhin ist die Prozesssteuerungsvorrichtung 1, wie sie in Fig. 1 dargestellt ist, bei einer möglichen Ausführungsform mittels Sensoren an den Prozess gekoppelt. Beispielsweise lassen sich mittels dieser Sensoren die Umgebungsprozessparameter UPP des Prozesses sensorisch erfassen. Der physikalische Prozess läuft in einem vorgegebenen Prozessraum PR ab. Dieser Prozessraum PR kann beispielsweise durch eine Wandung eines Strömungskanals begrenzt sein, durch den Objekte, beispielsweise Moleküle oder Gruppen von Molekülen, hindurchströmen. Weiterhin kann es sich beispielsweise bei dem Prozessraum PR um einen Raum handeln, der durch eine Gegenstandsoberfläche eines zu bearbeitenden Gegenstandes, insbesondere eines Werkstückes WS, begrenzt ist. Dieses Werkstück WS besteht seinerseits aus Objekten, insbesondere aus Atomen oder Gruppen von Atomen.

Wie in Fig. 4 dargestellt, weist die Prozesssteuerungsvorrichtung 1 eine Diskretisierungseinrichtung 2 sowie eine Berechnungseinrichtung 3 auf. Die Diskretisierungseinrichtung 2 und die Berechnungseinrichtung 3 können jeweils durch leistungsfähige Prozessoren implementiert sein. Alternativ ist es auch möglich, dass sowohl die Diskretisierungseinrichtung 2 als auch die Berechnungseinrichtung 3 auf einem Hochleistungsprozessor implementiert sind. Durch die Diskretisierungseinrichtung 2 wird der jeweilige physikalische Prozess durch partikelbasierte Gebietszerlegung des Prozessraumes PR in mehrere Teilvolumina VT zerlegt bzw. diskretisiert, in denen sich jeweils ein Partikel bzw. ein virtuelles Partikel P befindet, das eine Vielzahl innerhalb des jeweiligen Teilvolumens VT interagierender realer Objekte ersetzt und einen ersten Prozessparameter PP1 des Prozesses darstellt. Beispielsweise wird der Prozessparameter PP1 durch die Partikelgeschwindigkeit V des innerhalb eines Teilvolumens VT des Prozessraums PR befindlichen virtuellen Partikels gebildet.

Die Berechnungseinrichtung 3 führt eine Berechnung eines von dem ersten Prozessparameter PP1 abhängigen zweiten Prozessparameters PP2 mindestens für alle inneren Partikel des Prozessraumes mittels LME-Approximation durch. Handelt es sich bei dem ersten Prozessparameter PP1 beispielsweise um die Partikelgeschwindigkeit V, ist der berechnete zweite Prozessparameter PP2 beispielsweise ein Stresstensor $\sigma$ des innerhalb des Teilvolumens des Prozessraumes PR befindlichen Partikels P. Weiterhin führt die Berechnungseinheit 3 eine Berechnung des zweiten Prozessparameters PP2 für die äußeren Partikel $P_a$ des Prozessraumes mittels MLS-Approximation auf Basis der für die inneren Partikel $P_i$ des Prozessraumes PR berechneten zweiten Prozessparameters PP2, beispielsweise des Stresstensors $\sigma$, durch. Daraufhin wird durch die Berechnungseinrichtung 3 eine Interaktionsgröße IG zumindest für die inneren Partikel $P_i$ des Prozessraumes PR in Abhängigkeit von dem für die äußeren Partikel $P_a$ des Prozessraumes PR jeweils berechneten zweiten Prozessparameter PP2 berechnet. Bei der Interaktionsgröße IG handelt es sich beispielsweise um physikalische Kräfte F. Weiterhin werden die Interaktionsgrößen IG für die äußeren Partikel $P_a$ des Prozessraumes PR mittels MLS-Approximation auf Basis der für die inneren Partikel $P_i$ berechneten Interaktionsgrößen IG berechnet, falls nicht durch Randbedingung oder Sensorwerte vorgegeben. Die Berechnung der Interaktionsgrößen IG, beispielsweise der Kräfte F, für die Partikel P erfolgt vorzugsweise ebenfalls zur Laufzeit des physikalischen Prozesses P innerhalb der Anlage. Weiterhin wird durch die Berechnungseinrichtung 3 mindestens eine Steuergröße SG zur Steuerung des physikalischen Prozesses in dem Prozessraum PR in Abhängigkeit der für die inneren und äußeren Partikel berechneten Interaktionsgrößen IG, beispielsweise der Kräfte, berechnet. Auch die Berechnung der Steuergröße SG erfolgt vorzugsweise während der Laufzeit des Prozesses in der Anlage. Anschließend gibt die Prozesssteuerungsvorrichtung 1 die berechnete Steuergröße SG über eine Schnittstelle zur Einstellung eines Zielprozessparameters ZPP des physikalischen Prozesses ab. Die Steuergröße SG kann beispielsweise einen Aktor innerhalb der Prozessanlage einstellen. Auch diese Einstellung erfolgt vorzugsweise während der Laufzeit des Prozesses. Bei einer möglichen Ausführungsvariante erfolgt die Einstellung des Zielprozessparameters in Echtzeit in Reaktion auf sensorisch erfasste Veränderungen von Umgebungsprozessparametern UPP des Prozesses. Dabei kann der zweite Prozessparameter PP2 des Prozesses, beispielsweise der Stresstensor $\sigma$, von Umgebungsprozessparametern UPP des Prozesses abhängen. Diese werden von Sensoren, die in oder an dem Prozessraum angebracht sind, sensorisch erfasst und bei der Berechnung des zweiten Prozessparameters PP2, typischerweise des Stresstensors $\sigma$, in Abhängigkeit von dem ersten Prozessparameter PP1, beispielsweise der Geschwindigkeit V, mitberücksichtigt.

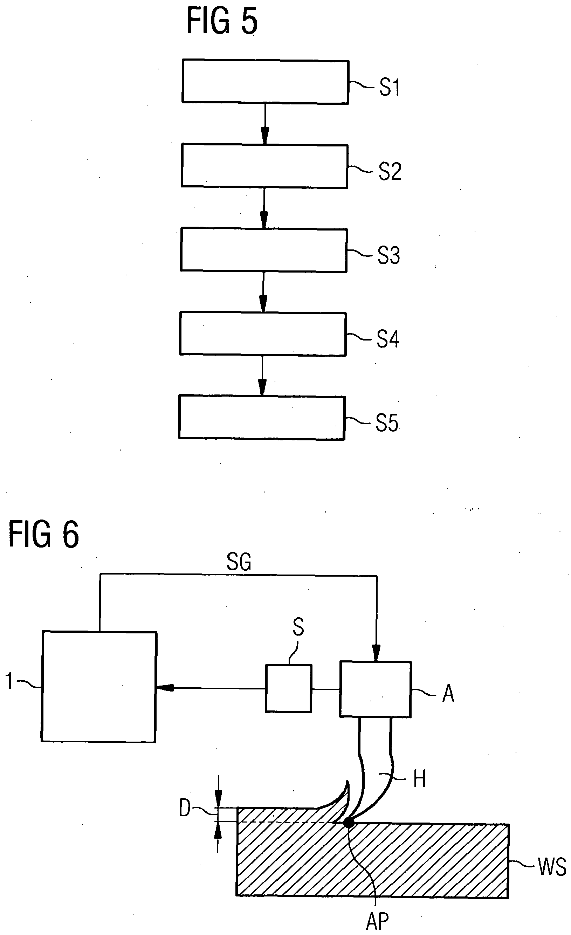

Fig. 5 zeigt ein Ablaufdiagramm zur Darstellung eines Ausführungsbeispiels des erfindungsgemäßen Verfahrens zur Prozesssteuerung bei einem physikalischen Prozess innerhalb einer Anlage.

In einem ersten Schritt S1 erfolgt eine Diskretisierung des physikalischen Prozesses durch partikelbasierte Gebietszerlegung des Prozessraumes PR in mehrere Teilvolumina VT, in denen jeweils ein Partikel bzw. virtuelles Partikel eine Vielzahl innerhalb des jeweiligen Teilvolumens VT interagierender Objekte ersetzt und einen ersten Prozessparameter PP1 des Prozesses darstellt.

In einem weiteren Schritt S2 erfolgt eine Berechnung eines von dem ersten Prozessparameter PP1 abhängigen zweiten Prozessparameters PP2 zumindest für die inneren Partikel $P_i$ des Prozessraumes PR mittels LME-Approximation sowie eine Berechnung des zweiten Prozessparameters PP2 für die äußeren Partikel $P_a$ des Prozessraumes mittels MLS-Approximation auf Basis des für die inneren Partikel $P_i$ des Prozessraumes PR berechneten zweiten Prozessparameters PP2.

In einem weiteren Schritt S3 wird mindestens eine Interaktionsgröße IG, beispielsweise eine Kraft F, zumindest für die inneren Partikel $P_i$ des Prozessraumes PR in Abhängigkeit von dem für die äußeren Partikel $P_a$ des Prozessraumes PR jeweils berechneten zweiten Prozessparameter PP2 mittels LME-Approximation berechnet. Weiterhin werden die Interaktionsgrößen IG für die äußeren Partikel $P_a$ des Prozessraumes PR mittels MLS-Approximation auf Basis der für die inneren Partikel $P_i$ berechneten Interaktionsgrößen IG berechnet.

In einem weiteren Schritt S4 erfolgt eine Berechnung mindestens einer Steuergröße SG zur Steuerung des physikalischen Prozesses in dem Prozessraum PR in Abhängigkeit der für die inneren und äußeren Partikel $P_a$ berechneten Interaktionsgrößen IG.

In einem weiteren Schritt S5 erfolgt eine Einstellung eines Zielprozessparameters ZPP des physikalischen Prozesses mittels der berechneten Steuergröße SG.

Fig. 6 zeigt ein Diagramm zur Darstellung eines einfachen Beispieles für einen Prozess, welcher mit dem erfindungsgemäßen Verfahren zur Prozesssteuerung bzw. durch die erfindungsgemäße Vorrichtung 1 zur Prozesssteuerung gesteuert wird.

Wie man aus Fig. 6 erkennen kann, wird bei dem dargestellten Prozess ein Werkstück WS, beispielsweise ein Werkstück aus Metall, mithilfe eines Hobelwerkzeuges H bearbeitet. Dabei trägt das Hobelwerkzeug H am oberen Rand des Werkstückes WS eine Schicht der Dicke D ab. Das Werkstück WS weist beispielsweise eine Temperatur T auf. Der Hobel bzw. das Werkzeug H setzt an einem Aufsetzpunkt AP auf. Der Prozessraum PR des Prozesses wird durch die Gegenstandsoberfläche des zu bearbeitenden Gegenstandes begrenzt, d.h. durch die Oberfläche des Werkstückes WS. Das Werkstück WS besteht aus Objekten, nämlich aus Atomen bzw. Molekülen bzw. Atomgruppen oder Molekülgruppen. Beispielsweise besteht das Werkstück WS aus Metallatomen, die interagierende Objekte darstellen. Das Hobelwerkzeug H ist an einen Aktuator A angeschlossen, der durch eine Prozesssteuerungsvorrichtung 1 angesteuert wird. Hierzu gibt die Prozesssteuerungsvorrichtung 1 ein Steuersignal bzw. eine Steuergröße SG an den Aktuator A ab, um die Position bzw. Lage des Hobelwerkzeuges H zu verstellen. Weiterhin kann eine externe Kraft $F_{ext}$ an dem Aufsetzpunkt AP eingestellt werden. Dadurch wird eine Aufsetzkraft $F_{AP}$ festgelegt. Diese Aufsetzkraft $F_{AP}$ hängt von der Divergenz des Stresstensors $\sigma$ des Werkstückes WS ab sowie von der externen Kraft $F_{ext}$:

$$F_{AP} = \text{div} \cdot \boldsymbol{\sigma} = AP + F_{ext}$$

Durch das Aufsetzen des Hobelwerkzeuges H auf der oberen Oberfläche des Werkstückes WS erfolgt eine leichte mechanische Verbiegung des Werkstückes WS, welches für die genaue Abtragung der oberen Schicht abträglich ist. Bei dem in Fig. 6 dargestellten Prozess soll die abgetragene Schicht an dem Werkstück WS, d.h. die Dicke d der abgetragenen Schicht möglichst konstant sein. Diese Schichtdicke d stellt bei dem dargestellten Prozessbeispiel somit einen Zielprozessparameter ZPP des physikalischen Prozesses dar. Die von dem Hobelwerkzeug H ausgeübte externe Kraft $EF_{ext}$ kann erfasst werden. Die Divergenz des Stresstensors $\sigma$ des Werkstückes WS wird mithilfe des erfindungsgemäßen Prozesssteuerungsverfahrens für die Ermittlung der Verformung des Werkstückes WS berechnet. Der Prozessraum PR, welcher durch die Oberfläche des Werkstückes WS begrenzt ist, wird zunächst durch die Prozesssteuerungsvorrichtung 1 diskretisiert und in mehrere Teilvolumina zerlegt, in denen jeweils ein virtuelles Partikel P eine Vielzahl innerhalb des jeweiligen Teilvolumens interagierender Objekte, beispielsweise Metallatome, ersetzt, wobei die Partikel bzw. virtuelle Partikel P einen ersten Prozessparameter PP1 des Prozesses darstellt. Der erste Prozessparameter ist beispielsweise eine Geschwindigkeit V an dem jeweiligen Materialpunkt bzw. Partikel. Anschließend wird durch die Prozesssteuerungsvorrichtung 1 ein von dem ersten Prozessparameter, d.h. der Geschwindigkeit, abhängiger zweiter Prozessparameter PP2 mindestens für die inneren Partikel $P_i$ des Prozessraumes PR mittels LME-Approximation berechnet. Beispielsweise wird der Stresstensor $\sigma$ an allen Punkten außer den Randpunkten aus der Divergenz der Geschwindigkeit V berechnet. Der Stresstensor $\sigma$ kann von einem Umgebungsprozessparameter UPP, beispielsweise der Temperatur T, abhängen. Weiterhin wird der zweite Prozessparameter PP2, beispielsweise der Stresstensor $\sigma$, für die äußeren Partikel $P_a$ des Prozessraumes PR, d.h. für die Oberflächenpartikel des Werkstückes WS mittels MLS-Approximation auf Basis des für die inneren Partikel $P_i$ des Prozessraumes PR berechneten zweiten Prozessparameters PP2, d.h. der hierfür berechneten Stresstensoren $\sigma$, berechnet. Daraufhin wird als Interaktionsgrößen IG die Kräfte F zumindest für die inneren Partikel $P_i$ des Prozessraumes PR in Abhängigkeit von dem für die äußeren Partikel $P_a$ des Prozessraumes PR jeweils berechneten zweiten Prozessparameter PP2 berechnet. Anschließend werden die Kräfte F für die äußeren Partikel $P_a$ des Prozessraumes PR mittels MLS-Approximation auf Basis der für die inneren Partikel Pi berechneten Kräfte F ausgerechnet, sofern nicht vorgegeben oder durch Sensor bestimmt. Anschließend wird eine Steuergröße SG zur Betätigung des Aktors in Abhängigkeit der für die inneren und äußeren Partikel berechneten Kräfte F berechnet, und insbesondere eine Kraft F am Aufsetzpunkt AP, an dem das Hobelwerkzeug H auf die Oberfläche des Werkstückes WS aufsetzt. Die Steuergröße SG stellt anschließend den Aktuator A für das Hobelwerkzeug in Abhängigkeit der berechneten Steuergröße SG ein.

Das erfindungsgemäße Verfahren erlaubt eine robuste Online-Steuerung von komplexen physikalischen Prozessen, insbesondere auch von komplexen Strömungsprozessen oder dergleichen. Das erfindungsgemäße Verfahren zur Prozesssteuerung ist nicht auf die in den Ausführungsbeispielen angegebenen Prozesse beschränkt, sondern eignet sich für jeden physikalischen Prozess in einem begrenzten Prozessraum PR, in dem Objekte interagieren. Das erfindungsgemäße Verfahren bietet eine höhere Genauigkeit durch eine an Deformationen angepasst Steuerung, wobei dies wiederum zu einer geringeren Werkzeugabnutzung oder einem geringeren Energieverbrauch führt.

Das in Fig. 5 dargestellte Verfahren kann beispielsweise durch ein Prozesssteuerungsprogramm ausgeführt werden, das auf einem Hochleistungsprozessor abläuft. Das Steuerungsprogramm wird zur Laufzeit bzw. Betriebszeit des Prozessors ausgeführt. Bei einer möglichen Ausführungsvariante erfolgt die Prozesssteuerung durch ein derartiges Prozesssteuerungsprogramm in Echtzeit bzw. in Realtime. Die Erfindung schafft ferner eine Prozesssteuerungsvorrichtung, welche ein derartiges Steuerungsprogramm zur Prozesssteuerung ausführt. Darüber hinaus schafft die Erfindung eine Prozessanlage mit mindestens einer Prozesssteuerung 1, wie sie beispielsweise in Fig. 4 dargestellt ist. Bei einer möglichen Ausführungsform wird ein Zielprozessparameters ZPP des physikalischen Prozesses mittels der Steuergröße SG geregelt. Weiterhin ist es bei einer Ausführungsvariante möglich, dass der Zielprozessparameters ZPP, beispielsweise die in Fig. 6 dargestellte Schichtdicke D, auf einen Sollwert geregelt wird.

## Patentansprüche

1. Verfahren zur Prozesssteuerung bei einem physikalischen Prozess, der in einem vorgegebenen Prozessraum (PR) abläuft,
mit den Schritten:

   (a) Diskretisieren (S1) des physikalischen Prozesses durch partikelbasierte Gebietszerlegung des Prozessraumes (PR) in mehrere Teilvolumina ($V_T$), in denen jeweils ein Partikel (P) eine Vielzahl innerhalb des jeweiligen Teilvolumens interagierender Objekte ersetzt und einen ersten Prozessparameter (PP1) des Prozesses darstellt;

   (b) Berechnen (S2) eines von dem ersten Prozessparameter (PP1) abhängigen zweiten Prozessparameters (PP2) zumindest für innere Partikel ($P_i$) des Prozessraumes (PR) mittels Lokaler Maximal-Entropie-Approximation und Berechnen des zweiten Prozessparameters (PP2) für äußere Partikel des Prozessraumes (PR) mittels Gleitender Kleiste-Quadrate-Approximation auf Basis der für die inneren Partikel $P_i$ des Prozessraumes (PR) berechneten zweiten Prozessparameters (PP2);

   (c) Berechnen (S3) einer Interaktionsgröße (IG) zumindest für die inneren Partikel ($P_i$) des Prozessraumes (PR) in Abhängigkeit von dem für die äußeren Partikel ($P_a$) des Prozessraumes (PR) jeweils berechneten zweiten Prozessparameter (PP2) mittels LME-Approximation und der Interaktionsgrößen (IG) für die äußeren Partikel ($P_a$) des Prozessraumes (PR) mittels MLS-Approximation auf Basis der für die inneren Partikel ($P_i$) berechneten Interaktionsgrößen (IG);

   (d) Berechnen (S4) mindestens einer Steuergröße (SG) zur Steuerung des physikalischen Prozesses in dem Prozessraum (PR) in Abhängigkeit der für die inneren und äußeren Partikel ($P_i,P_a$) berechneten Interaktionsgrößen (IG); und

   (e) Einstellen (S5) eines Zielprozessparameters (ZPP) des physikalischen Prozesses mittels der berechneten Steuergröße (SG).

2. Verfahren nach Anspruch 1,
wobei in dem Prozessraum (PR) mikroskopische Objekte, makroskopische Objekte, mesokopische Objekte enthalten sind, die miteinander interagieren.

3. Verfahren nach Anspruch 2,
wobei die mikroskopischen Objekte Elementarteilchen, Atome, Moleküle und/oder Mikropartikel in fester, fluider oder gasförmiger Form aufweisen,
wobei die makroskopischen Objekte Personen und/oder bewegliche Gegenstände aufweisen, und
wobei die mesokopischen Objekte Vereinigungen von mikroskopischen Objekten aufweisen.

4. Verfahren nach einem der vorangehenden Ansprüche 1 bis 3, wobei die Berechnung der Interaktionsgrößen (IG) für die Partikel (P) in Abhängigkeit des zweiten Prozessparameters (PP2) iterativ erfolgt.

5. Verfahren nach einem der vorangehenden Ansprüche 1 bis 4, wobei der Zielprozessparameter (ZPP) des physikalischen Prozesses durch einen von dem ersten Prozessparameter (PP1) abhängigen Zielprozessparameter (ZPP) des physikalischen Prozesses gebildet wird.

6. Verfahren nach einem der vorangehenden Ansprüche 1 bis 5, wobei die Interaktionsgrößen (IG) durch Kräfte (F) gebildet werden, die zwischen den Partikeln (P) herrschen.

7. Verfahren nach einem der vorangehenden Ansprüche 1 bis 6, wobei der erste Prozessparameter (PP1) durch die Partikelgeschwindigkeit (V) des innerhalb eines Teilvolumens ($V_T$) des Prozessraumes (PR) befindlichen Partikels (P) gebildet wird.

8. Verfahren nach einem der vorangehenden Ansprüche 1 bis 7, wobei der zweite Prozessparameter (PP2) durch einen Stresstensor ($\Sigma$) des innerhalb des Teilvolumens ($V_T$) des Prozessraumes (PR) befindlichen Partikels (P) gebildet wird.

9. Verfahren nach einem der vorangehenden Ansprüche 1 bis 8, wobei die Steuergröße (SG) mindestens einen Aktor (A) des Prozesses steuert.

10. Verfahren nach einem der vorangehenden Ansprüche 1 bis 9, wobei der zweite Prozessparameter (PP2) des Prozesses von Umgebungsprozessparametern (UPP) des Prozesses abhängt, die an oder in dem Prozessraum (PR) mittels Sensoren (S) sensorisch erfasst werden und bei der Berechnung des zweiten Prozessparameters (PP2) in Abhängigkeit von dem ersten Prozessparameter (PP1) berücksichtigt werden.

11. Verfahren nach einem der vorangehenden Ansprüche 1 bis 10, wobei die Berechnung der Interaktionsgröße (IG) für die Partikel (P) und der Steuergröße (SG) zur Laufzeit des Prozesses (P) erfolgt.

12. Verfahren nach einem der vorangehenden Ansprüche 1 bis 11, wobei der Zielparameter (ZPP) des physikalischen Prozesses mittels der Steuergröße (SG) gesteuert oder auf einen Sollwert geregelt wird.

13. Verfahren nach einem der vorangehenden Ansprüche 1 bis 12, wobei der Prozessraum (PR) des Prozesses durch eine Gegenstandsoberfläche eines zu bearbeitenden Gegenstandes begrenzt wird, das aus Objekten, insbesondere Atomen oder Gruppen von Atomen, besteht.

14. Verfahren nach einem der vorangehenden Ansprüche 1 bis 13, wobei der Prozessraum (PR) des Prozesses durch eine Wandung eines Strömungskanals begrenzt wird, durch den Objekte, insbesondere Moleküle oder Gruppen von Molekülen, strömen.

15. Verfahren nach Anspruch 1 bis 6, wobei der erste Parameter (PP1) des Prozesses (P) durch eine Partikeltemperatur (T) oder einen Partikeldruck des innerhalb eines Teilvolumens ($V_T$) des Prozessraumes (PR) befindlichen Partikels (P) gebildet wird.

16. Prozesssteuerungsvorrichtung (1) zur Prozesssteuerung bei einem physikalischen Prozess, der in einem vorgegebenen Prozessraum (PR) abläuft mit:

   einer Diskretisierungseinrichtung (2) zum Diskretisieren des physikalischen Prozesses durch partikelbasierte Gebietszerlegung des Prozessraumes (PR) in mehrere Teilvolumina (VT), in denen jeweils ein Partikel (P) eine Vielzahl innerhalb des jeweiligen Teilvolumens interagierender Objekte ersetzt und einen ersten Prozessparameter (PP1) des Prozesses darstellt;
   einer Berechnungseinrichtung (2) zur Berechnung eines von dem ersten Prozessparameter (PP1) abhängigen zweiten Prozessparameters (PP2) zumindest für innere Partikel ($P_i$) des Prozessraumes (PR) mittels Lokaler Maximal-Entropie-Approximation und Berechnen des zweiten Prozessparameters (PP2) für äußere Partikel ($P_a$) des Prozessraumes (PR) mittels Gleitender Kleinste-Quadrate-Approximation auf Basis der für die inneren Partikel ($P_i$) des Prozessraumes (PR) berechneten zweiten Prozessparameter (PP2), wobei die Berechnungseinrichtung (2) Interaktionsgrößen (IG) zumindest für die inneren Partikel ($P_i$) des Prozessraumes (PR) in Abhängigkeit von dem für die äußeren Partikel ($P_a$) des Prozessraumes (PR) jeweils berechneten zweiten Prozessparameter (PP2) mittels LME-Approximation und die Interaktionsgrößen (IG) für die äußeren Partikel ($P_a$) des Prozessraumes (PR) mittels MLS-Approximation auf Basis der für die inneren Partikel ($p_i$) berechneten Interaktionsgrößen (IG) berechnet, wobei die Berechnungseinrichtung (3) anschließend mindestens eine Steuergröße (SG) zur Steuerung des physikalischen Prozesses in dem Prozessraum (PR) in Abhängigkeit der für die inneren und äußeren Partikel berechneten Interaktionsgrößen (IG) berechnet, wobei ein Zielprozessparameter (ZPP) des physikalischen Prozesses mittels der berechneten Steuergröße (SG) einstellbar ist.

## Claims

1. Method for process control in a physical process running in a prescribed process area (PR), having the steps of:

   (a) discretizing (S1) of the physical process by means of particle-based domain decomposition of the process area (PR) into a plurality of partial volumes ($V_T$), in which one particle (P) respectively replaces a multiplicity of objects interacting within the respective partial volume and constitutes a first process parameter (PP1) of the process;
   (b) calculating (S2) a second process parameter (PP2), dependent on the first process parameter (PP1), at least for inner particles ($P_i$) of the process area (PR) by means of Local Maximum Entropy approximation, and calculating the second process parameter (PP2) for outer particles of the process area (PR) by means of Moving Least Squares approximation on the basis of the second process parameter (PP2) calculated for the inner particles ($P_i$) of the process area (PR);
   (c) calculating (S3) an interaction variable (IG) at least for the inner particles ($P_i$) of the process area (PR) as a function of the second process parameter (PP2) respectively calculated for the outer particles ($P_a$) of the process area (PR), by means of LME approximation, and calculating the interaction variables (IG) for the outer particles ($P_a$) of the process area (PR) by means of MLS approximation on the basis of the interaction variables (IG) calculated for the inner particles ($P_i$) ;
   (d) calculating (S4) at least one control variable (SG) for controlling the physical process in the process area (PR) as a function of the interaction variables (IG) calculated for the inner and outer particles ($P_i$, $P_a$) ; and
   (e) setting (S5) a target process parameter (ZPP) of the physical process by means of the calculated control variable (SG).

2. Method according to Claim 1,
   in which microscopic objects, macroscopic objects and mesoscopic objects which interact with one another are contained in the process area (PR).

3. Method according to Claim 2,
   in which the microscopic objects have elementary particles, atoms, molecules and/or microparticles in solid, liquid or gaseous form,
   the macroscopic objects having persons and/or moving articles, and
   the mesoscopic objects having associations of microscopic objects.

4. Method according to one of the preceding Claims 1 to 3, in which the calculation of the interaction variables (IG) for the particles (P) is performed iteratively as a function of the second process parameter (PP2).

5. Method according to one of the preceding Claims 1 to 4, in which the target process parameter (ZPP) of the physical process is formed by a target process parameter (ZPP) of the physical process which is dependent on the first process parameter (PP1).

6. Method according to one of the preceding Claims 1 to 5, in which the interaction variables (IG) are formed by forces (F) which prevail between the particles (P).

7. Method according to one of the preceding Claims 1 to 6, in which the first process parameter (PP1) is formed by the particle speed (V) of the particle (P) located within a partial volume ($V_T$) of the process area (PR).

8. Method according to one of the preceding Claims 1 to 7, in which the second process parameter (PP2) is formed by a stress tensor ($\Sigma$) of the particle (P) located within the partial volume ($V_T$) of the process area (PR).

**EP 2 801 001 B1**

9. Method according to one of the preceding Claims 1 to 8, in which the control variable (SG) controls at least one actuator (A) of the process.

10. Method according to one of the preceding Claims 1 to 9, in which the second process parameter (PP2) of the process is dependent on environmental process parameters (UPP) of the process which are detected by means of sensors (S) on or in the process area (PR), and are taken into account in the calculation of the second process parameter (PP2) as a function of the first process parameter (PP1).

11. Method according to one of the preceding Claims 1 to 10, in which the calculation of the interaction variable (IG) for the particles (P) and the calculation of the control variable (SG) is performed during the runtime of the process (P).

12. Method according to one of the preceding Claims 1 to 11, in which the target parameter (ZPP) of the physical process is controlled by means of the control variable (SG) or regulated to a desired value.

13. Method according to one of the preceding Claims 1 to 12, in which the process area (PR) of the process is delimited by an article surface of an article to be processed, the article consisting of objects, in particular atoms or groups of atoms.

14. Method according to one of the preceding Claims 1 to 13, in which the process area (PR) of the process is bounded by a wall of a flow channel through which objects, in particular molecules or groups of molecules, flow.

15. Method according to Claims 1 to 6,
in which the first parameter (PP1) of the process (P) is formed by a particle temperature (T) or a particle pressure of the particle (P) located within a partial volume ($V_T$) of the process area (PR).

16. Process control apparatus (1) for process control in a physical process running in a prescribed process area (PR), comprising:

a discretization device (2) for discretizing of the physical process by means of particle-based domain decomposition of the process area (PR) into a plurality of partial volumes ($V_T$), in which one particle (P) respectively replaces a multiplicity of objects interacting within the respective partial volume and constitutes a first process parameter (PP1) of the process;
a calculation device (3) for calculating a second process parameter (PP2), dependent on the first process parameter (PP1), at least for inner particles ($P_i$) of the process area (PR) by means of Local Maximum Entropy approximation, and calculating the second process parameter (PP2) for outer particles ($P_a$) of the process area (PR) by means of Moving Least Squares approximation on the basis of the second process parameter (PP2) calculated for the inner particles ($P_i$) of the process area (PR), the calculation device (3) calculating interaction variables (IG) at least for the inner particles ($P_i$) of the process area (PR) as a function of the second process parameter (PP2), respectively calculated for the outer particles ($P_a$) of the process area (PR), by means of LME approximation, and calculating the interaction variables (IG) for the outer particles ($P_a$) of the process area (PR) by means of MLS approximation on the basis of the interaction variables (IG) calculated for the inner particles ($P_i$), the calculation device (3) subsequently calculating at least one control variable (SG) for controlling the physical process in the process area (PR) as a function of the interaction variables (IG) calculated for the inner and outer particles, it being possible to set a target process parameter (ZPP) of the physical process by means of the calculated control variable (SG).

**Revendications**

1. Procédé de commande de processus pour un processus physique qui se déroule dans un espace de processus (PR) prédéterminé,
comprenant les étapes consistant à :

(a) discrétiser (S1) le processus physique grâce à un zonage, basé sur les particules, de l'espace de processus (PR) en plusieurs volumes partiels ($V_T$) dans lesquels respectivement une particule (P) remplace une pluralité d'objets interagissant à l'intérieur du volume partiel respectif et présente un premier paramètre de processus (PP1) du processus ;
(b) calculer (S2) un deuxième paramètre de processus (PP2), dépendant du premier paramètre de processus (PP1), au moins pour des particules internes ($P_i$) de l'espace de processus (PR) au moyen d'une approximation par la méthode de l'entropie maximale locale (LME) et calculer le deuxième paramètre de processus (PP2) pour des particules externes de l'espace de processus (PR) au moyen d'une approximation par la méthode des moindres carrés mobiles sur la base du deuxième paramètre de processus (PP2) calculé pour les particules internes ($P_i$) de l'espace de processus (PR) ;

(c) calculer (S3) une grandeur d'interaction (IG) au moins pour les particules internes ($P_i$) de l'espace de processus (PR) en fonction du deuxième paramètre de processus (PP2) calculé respectivement pour les particules externes ($P_a$) de l'espace de processus (PR) au moyen d'une approximation LME et calculer les grandeurs d'interaction (IG) pour les particules externes ($P_a$) de l'espace de processus (PR) au moyen d'une approximation MLS sur la base des grandeurs d'interaction (IG) calculées pour les particules internes ($P_i$) ;

(d) calculer (S4) au moins une grandeur de commande (SG) pour une commande du processus physique dans l'espace de processus (PR) en fonction des grandeurs d'interaction (IG) calculées pour les particules internes et externes ($P_i$, $P_a$) ; et

(e) ajuster (S5) un paramètre de processus cible (ZPP) du processus physique au moyen de la ou des grandeur(s) de commande (SG) calculée(s).

2. Procédé selon la revendication 1,
dans lequel des objets microscopiques, des objets macroscopiques, des objets mésoscopiques, qui interagissent les uns avec les autres, sont contenus dans l'espace de processus (PR).

3. Procédé selon la revendication 2,
dans lequel les objets microscopiques représentent des particules élémentaires, des atomes, des molécules et/ou des microparticules sous une forme solide, fluide ou gazeuse,
dans lequel les objets macroscopiques représentent des personnes et/ou des objets mobiles, et
dans lequel les objets mésoscopiques représentent des coalescences d'objets microscopiques.

4. Procédé selon l'une quelconque des revendications 1 à 3, dans lequel le calcul des grandeurs d'interaction (IG) pour les particules (P) se fait de manière itérative en fonction du deuxième paramètre de processus (PP2).

5. Procédé selon l'une quelconque des revendications 1 à 4, dans lequel le paramètre de processus cible (ZPP) du processus physique est formé grâce à un paramètre de processus cible (ZPP), dépendant du premier paramètre de processus (PP1), du processus physique.

6. Procédé selon l'une quelconque des revendications 1 à 5, dans lequel les grandeurs d'interaction (IG) sont formées grâce à des forces (F) agissant entre les particules (P).

7. Procédé selon l'une quelconque des revendications précédentes 1 à 6, dans lequel le premier paramètre de processus (PP1) est formé grâce à la vitesse de particule (V) de la particule (P) se trouvant à l'intérieur d'un volume partiel ($V_T$) de l'espace de processus (PR).

8. Procédé selon l'une quelconque des revendications précédentes 1 à 7, dans lequel le deuxième paramètre de processus (PP2) est formé grâce à un tenseur des contraintes ($\Sigma$) de la particule (P) se trouvant à l'intérieur du volume partiel ($V_T$) de l'espace de processus (PR).

9. Procédé selon l'une quelconque des revendications 1 à 8, dans lequel la grandeur de commande (SG) commande au moins un acteur (A) du processus.

10. Procédé selon l'une quelconque des revendications 1 à 9, dans lequel le deuxième paramètre de processus (PP2) du processus dépend de paramètres de processus environnementaux (UPP) du processus, qui sont captés par détection au niveau de ou dans l'espace de processus (PR) au moyen de capteurs (S) et qui sont pris en compte lors du calcul du deuxième paramètre de processus (PP2) en fonction du premier paramètre de processus (PP1).

11. Procédé selon l'une quelconque des revendications 1 à 10,
dans lequel le calcul des grandeurs d'interaction (IG) se fait pour la particule (P) et le calcul de la grandeur de commande (SG) se fait par rapport à la durée d'exécution du processus (P).

12. Procédé selon l'une quelconque des revendications 1 à 11, dans lequel le paramètre cible (ZPP) du processus physique est commandé au moyen de la grandeur de commande (SG) ou est régulé grâce à une valeur de consigne.

**13.** Procédé selon l'une quelconque des revendications précédentes 1 à 12,
dans lequel l'espace de processus (PR) du processus est délimité par une surface d'élément d'un élément à traiter, ledit élément étant constitué d'objets, en particulier d'atomes ou de groupes d'atomes.

**14.** Procédé selon l'une quelconque des revendications 1 à 13,
dans lequel l'espace de processus (PR) du processus est délimité par une paroi d'un canal de circulation à travers lequel circulent des objets, en particulier des molécules ou des groupes de molécules.

**15.** Procédé selon l'une quelconque des revendications 1 à 6,
dans lequel le premier paramètre (PP1) du processus (P) est formé grâce à une température de particule (T) ou à une pression de particule de la particule (P) se trouvant à l'intérieur d'un volume partiel ($V_T$) de l'espace de processus (PR).

**16.** Dispositif de commande de processus (1) destiné à commander un processus lors d'un processus physique qui se déroule dans un espace de processus (PR) prédéterminé, avec :

un appareil de discrétisation (2) destiné à discrétiser le processus physique grâce à un zonage, basé sur les particules, de l'espace de processus (PR) en plusieurs volumes partiels (VT) dans lesquels respectivement une particule (P) remplace une pluralité d'objets interagissant à l'intérieur du volume partiel respectif et présente un premier paramètre de processus (PP1) du processus ;
un appareil de calcul (2) destiné à calculer un deuxième paramètre de processus (PP2), dépendant du premier paramètre de processus (PP1), au moins pour des particules internes ($P_i$) de l'espace de processus (PR) au moyen d'une approximation par la méthode de l'entropie maximale locale et calculer le deuxième paramètre de processus (PP2) pour des particules externes ($P_a$) de l'espace de processus (PR) au moyen d'une approximation par la méthode des moindres carrés mobiles sur la base des deuxièmes paramètres de processus (PP2) calculés pour les particules internes ($P_i$) de l'espace de processus (PR), dans lequel l'appareil de calcul (2) calcule des grandeurs d'interaction (IG) au moins pour les particules internes ($P_i$) de l'espace de processus (PR) en fonction du deuxième paramètre de processus (PP2) calculé respectivement pour les particules externes ($P_a$) de l'espace de processus (PR) au moyen d'une approximation LME et calcule les grandeurs d'interaction (IG) pour les particules externes ($P_a$) de l'espace de processus (PR) au moyen d'une approximation MLS sur la base des grandeurs d'interaction (IG) calculées pour les particules internes ($P_i$), dans lequel l'appareil de calcul (3) calcule ensuite au moins une grandeur de commande (SG), destinée à commander le processus physique dans l'espace de processus (PR), en fonction des grandeurs d'interaction (IG) calculées pour les particules internes et externes, dans lequel un paramètre de processus cible (ZPP) du processus physique peut être ajusté au moyen de la ou des grandeur(s) de commande (SG) calculée(s).

FIG 1A

FIG 1B

FIG 2

FIG 3

FIG 4

## FIG 5

```
┌──────────────────────┐
│                      │──── S1
└──────────────────────┘
          │
          ▼
┌──────────────────────┐
│                      │──── S2
└──────────────────────┘
          │
          ▼
┌──────────────────────┐
│                      │──── S3
└──────────────────────┘
          │
          ▼
┌──────────────────────┐
│                      │──── S4
└──────────────────────┘
          │
          ▼
┌──────────────────────┐
│                      │──── S5
└──────────────────────┘
```

## FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100042386 A1

**In der Beschreibung aufgeführte Nicht-Patentliteratur**

- **A.B. YU.** Discrete element method -An effective way for particle scale research of particulate matter. *In: Engineering Computations,* 2004, vol. 21 (2/3/4), ISSN 0264-4401, 205-214
- **G.A. DILTS.** Moving-Least-Square-Particle Hydrodynamics. *Consistency and Stability, Int. J. Numer. Meth. Engng.,* vol. 44, 1115
- **M. ARROYO ; M. ORTIZ.** Local maximum-entropy approximation schemes: a seamless bridge between finite elements and meshfree methods. *Int. J. Numer. Meth. Engng.,* 2006, vol. 65, 2167-2202